# EUROPEAN PATENT APPLICATION

(11) **EP 4 647 884 A1**
(43) Date of publication of application: **12.11.2025**
(21) Application number: 23920848.1
(22) Date of filing: 30.11.2023
(51) Int. Cl.: G06F 3/04817

(54) **COLLABORATIVE WORKING METHOD AND ELECTRONIC DEVICE**

(30) Priority: 07.02.2023 CN 202310129855
(71) Applicant: Huawei Technologies Co., Ltd., Shenzhen, Guangdong 518129 (CN)
(72) Inventor: BAI, Fangyuan, Shenzhen, Guangdong 518129 (CN); TAN, Yang, Shenzhen, Guangdong 518129 (CN); MI, Junying, Shenzhen, Guangdong 518129 (CN)
(74) Representative: Pfenning, Meinig & Partner mbB
(86) International application number: PCT/CN2023/135734
(87) International publication number: WO 2024/164659

(57) **Abstract**

A collaborative working method and an electronic device are provided, relate to the field of terminal technologies, and can improve use performance of the electronic device. The method may be applied to the electronic device or a component that can implement a function of the electronic device. The method includes: The electronic device controls, via a first processing unit, displaying of a first interface, where the first interface includes a first icon. The electronic device detects an operation performed by a user on the first icon, and runs a first application via a second processing unit. In addition, when a predetermined event occurs, the second processing unit controls the first application running in a background to be handed over to a foreground for displaying, and the second processing unit controls displaying of an interface corresponding to the event.

## Description

This application claims priority to Chinese Patent Application No. 202310129855.3, filed with the China National Intellectual Property Administration on February 7, 2023 and entitled "COLLABORATIVE WORKING METHOD AND ELECTRONIC DEVICE", which is incorporated herein by reference in its entirety.

### TECHNICAL FIELD

This application relates to the field of terminal technologies, and in particular, to a collaborative working method and an electronic device.

### BACKGROUND

Currently, a user may use an electronic device such as a mobile phone to achieve functions such as interface displaying. In some solutions, the electronic device may process an interface via an application processor (application processor, AP), and control displaying of the interface. In such solutions, the AP can efficiently process the interface. However, a higher processing capability means higher computing power consumption, which may affect performance of the electronic device.

### SUMMARY

This application provides a collaborative working method and an electronic device, to improve use performance of the electronic device.

To achieve the foregoing objective, this application provides the following technical solutions.

According to a first aspect, this application provides a collaborative working method, applied to a component (for example, a chip system) that can implement a function of an electronic device. The method includes: A first processing unit controls displaying of a first interface, where the first interface includes a first icon. The first processing unit detects an operation performed by a user on the first icon, and sends a first message to a second processing unit, where the first message indicates the second processing unit to run a first application, and the first processing unit and the second processing unit are located in a same electronic device.

In the foregoing method, the first processing unit may send the first message to the second processing unit in response to the operation performed by the user on the first icon, to hand over the first application to run on the second processing unit, which meets a running requirement of the first application and improves availability of the electronic device.

In a possible design, the first icon is an icon of a second application, the second application runs on the first processing unit, and the second application is a shell application of the first application.

For example, the first icon is an icon of a heart rate shell application (an example of the second application) running on an AP (an example of the first processing unit), and the icon may be used to start a heart rate application running on an MCU (an example of the second processing unit).

In a possible design, after the operation performed by the user on the first icon is detected, the method further includes:
obtaining first configuration information, where the first configuration information indicates a handover to the second processing unit for controlling displaying of a second interface; and
controlling, via the second processing unit, displaying of the second interface includes: based on the first configuration information, performing a handover to the second processing unit for controlling displaying of the second interface.

In a possible design, after the operation performed by the user on the first icon is detected, the method further includes:
The first processing unit sends information about the first interface to the second processing unit, to enable the second processing unit to control, based on the information about the first interface when detecting an operation of returning to the first interface, displaying of an image of the first interface.

In a possible design, after the first processing unit sends the information about the first interface to the second processing unit, the method further includes:
The first processing unit receives a second message from the second processing unit.

The first processing unit controls, in response to the second message, displaying of the first interface.

For example, in a process in which the MCU (an example of the second processing unit) controls displaying of a heart rate interface, if an operation of returning to a home screen (an example of the first interface) is detected, the electronic device may first control, via the MCU, displaying of an image of the home screen. Subsequently, after a control right of a display is handed over to the AP, the AP controls displaying of a real home screen. In this way, the user's demand of jumping to the home screen can be responded in a timely manner, to enable the interface to smoothly transition from the heart rate interface to the home screen, which avoids a problem of a home screen displaying delay caused by a processor handover.

In a possible design, the first interface further includes a second icon, the second icon is used to trigger running of a fourth application, user interface UI effect of the second icon is different from UI effect of the first icon, and the method further includes:
The first processing unit detects an operation performed by the user on the second icon, and the first processing unit controls displaying of an interface of the fourth application.

In a possible design, after the first processing unit detects the operation performed by the user on the first icon, the method further includes:
The first processing unit hands over a control right of a first device to the second processing unit.

In this way, in a corresponding scenario, the first processing unit may hand over the control permission of an input/output device such as a display to a corresponding processor (for example, the second processing unit), so that a corresponding function is performed via the corresponding processor to meet a current use scenario and improve availability.

In a possible design, after the first processing unit sends the first message to the second processing unit, the method further includes:
The first processing unit receives a handover indication from the second processing unit, where the handover indication indicates the first processing unit to hand over the control right of the first device to the second processing unit.

In a possible design, both the first processing unit and the second processing unit are powered on. In this way, because the AP and the MCU can collaboratively work in different scenarios, a problem that some functions cannot be implemented when the MCU works independently in a power saving mode can be avoided, and availability of the electronic device is improved. For example, when the AP is powered on, the electronic device may perform a handover to the MCU for controlling displaying of an interface, to reduce displaying power consumption.

In a possible design, the first processing unit is the microcontroller unit MCU, and the second processing unit is the application processor AP, or the first processing unit is the AP, and the second processing unit is the MCU.

In this way, displaying requirements of the electronic device in different scenarios can be met. For example, in some scenarios, if power consumption caused by displaying an interface needs to be reduced, the electronic device may perform the handover to the MCU for controlling displaying of the interface. In some scenarios, if displaying effect needs to be improved, the electronic device may perform a handover to the AP for controlling displaying of the interface.

In a possible design, the first device includes at least one of the following devices: a display, a button, and a touchscreen.

In a possible design, before the second processing unit controls displaying of the second interface, the method further includes:
controlling, via the first processing unit, displaying of first animation effect. In this way, smooth transition between interfaces can be implemented.

In a possible design, the first processing unit is the MCU, the second processing unit is the AP, the first interface is an interface matching a processing capability of the first processing unit, and the second interface is an interface matching a processing capability of the second processing unit.

According to a second aspect, a collaborative working method is provided. The method includes: A second processing unit receives a first message from a first processing unit, where the first message indicates the second processing unit to run a first application. The second processing unit runs the first application in response to the first message.

In a possible design, the method further includes:
The second processing unit detects that the first application is closed, and sends a third message to the first processing unit, to enable the first processing unit to control displaying of a second interface.

For example, an MCU (an example of the second processing unit) detects that a heart rate application (an example of the first application) is closed, and sends the third message to an AP (an example of the first processing unit), to enable the AP to control displaying of a home screen (an example of the second interface).

In a possible design, the method further includes:
The second processing unit controls displaying of a third interface of a fifth application.

The second processing unit detects an operation of accessing a fourth interface of the fifth application, and the second processing unit sends a fourth message to the first processing unit, where the fourth message indicates the first processing unit to control displaying of the fourth interface. In this way, in different scenarios, displaying of different interfaces of a same application may be controlled by different processing units, which can meet a corresponding displaying requirement of a corresponding interface.

In a possible design, before the second processing unit runs the first application, the method further includes:
The second processing unit sends a handover indication to the first processing unit, where the handover indication indicates the first processing unit to hand over a control right of a first device to the second processing unit.

In a possible design, both the first processing unit and the second processing unit are powered on.

In a possible design, the first processing unit is a microcontroller unit MCU, and the second processing unit is an application processor AP, or the first processing unit is an AP, and the second processing unit is an MCU.

In a possible design, the first device includes at least one of the following devices: a display, a button, and a touchscreen.

For beneficial effects of various designs of the second aspect, refer to related descriptions of the first aspect. Details are not described again.

According to a third aspect, a collaborative working method is provided. The method includes:
A second processing unit controls a third application to run in a background. The second processing unit detects that a first event of the third application is triggered, and sends a fifth message to a first processing unit, to enable the first processing unit to hand over a control right of a display to the second processing unit.

The second processing unit controls an interface of the third application to be displayed on the display.

In this way, in response to the first event of the third application, the second processing unit may send the fifth message to the first processing unit without being perceived by a user, so that the control right of the display is handed over to the second processing unit. In this way, the second processing unit may control the interface of the third application to be displayed on the display, to meet a displaying requirement of the third application.

In a possible design, both the first processing unit and the second processing unit are powered on.

In a possible design, the first processing unit is a microcontroller unit MCU, and the second processing unit is an application processor AP, or the first processing unit is an AP, and the second processing unit is an MCU.

According to a fourth aspect, a collaborative working method is provided. The method includes: A first processing unit controls displaying of a fifth interface. If a first event of a third application running in a background is triggered, the first processing unit indicates a second processing unit to control displaying of an interface of the third application.

In a possible design, that the first processing unit indicates the second processing unit to control displaying of the interface of the third application includes:
The first processing unit hands over a control right of a display to the second processing unit, to enable the second processing unit to control the interface of the third application to be displayed on the display.

In a possible design, before the first processing unit hands over the control right of the display to the second processing unit, the method further includes:
The first processing unit receives a fifth message from the second processing unit, where the fifth message indicates the first processing unit to hand over the control right of the display to the second processing unit.

In a possible design, both the first processing unit and the second processing unit are powered on.

In a possible design, the first processing unit is a microcontroller unit MCU, and the second processing unit is an application processor AP, or the first processing unit is an AP, and the second processing unit is an MCU.

In a possible design, the method further includes: An electronic device controls, via the application processor, displaying of a third interface, detects that the electronic device enters a lock screen state, and controls, via the microcontroller unit, displaying of a lock screen interface. In this way, in a lock screen scenario, a watch may control, via the MCU, displaying of an interface, which can reduce power consumption of the watch caused by displaying can be reduced.

According to a fifth aspect, a collaborative working method is provided, applied to an electronic device or a component (for example, a chip system) that can implement a function of an electronic device, where the electronic device includes a first processing unit and a second processing unit. The method includes:
The electronic device controls, via the first processing unit, displaying of a first interface, where the first interface includes a first icon.

The electronic device detects an operation performed by a user on the first icon, and runs a first application via the second processing unit.

In a possible design, the first icon is an icon of a second application, the second application runs on the first processing unit, and the second application is a shell application of the first application.

In a possible design, after the electronic device detects an operation performed by a user on the first icon, the method further includes:
sending a first message to the second processing unit via the first processing unit, where the first message indicates the second processing unit to run the first application.

In a possible design, after the electronic device detects the operation performed by the user on the first icon, the method further includes:
The first processing unit sends information about the first interface to the second processing unit.

The second processing unit receives an operation of returning to the first interface.

The second processing unit controls, based on the information about the first interface, displaying of an image of the first interface.

The second processing unit sends a second message to the first processing unit, where the second message indicates the first processing unit to control displaying of the first interface.

The first processing unit receives the second message from the second processing unit, and the first processing unit controls, in response to the second message, displaying of the first interface.

In a possible design, after the electronic device detects the operation performed by the user on the first icon, the method further includes:
handing over a control right of a first device to the second processing unit via the first processing unit.

In a possible design, after sending the first message to the second processing unit via the first processing unit, the method further includes:
sending a handover indication to the first processing unit via the second processing unit, where the handover indication indicates the first processing unit to hand over the control right of the first device to the second processing unit.

In a possible design, the first processing unit is a microcontroller unit MCU, and the second processing unit is an application processor AP, or the first processing unit is an AP, and the second processing unit is an MCU.

In a possible design, the first device includes at least one of the following devices: a display, a button, and a touchscreen.

According to a sixth aspect, a collaborative working method is provided, applied to an electronic device or a chip system, where the electronic device includes a first processing unit and a second processing unit. The method includes:
The electronic device controls, via the first processing unit, displaying of a fifth interface.

The electronic device controls, via the second processing unit, a third application to run in a background.

The electronic device detects a first event of the third application via the second processing unit, and controls, via the second processing unit, displaying of an interface of the third application.

In a possible design, after the electronic device detects the first event of the third application via the second processing unit, the method further includes:
The second processing unit sends a fifth message to the first processing unit.

The first processing unit receives the fifth message, and hands over a control right of a display to the second processing unit based on the fifth message.

In a possible design, the first processing unit is a microcontroller unit MCU, and the second processing unit is an application processor AP, or the first processing unit is an AP, and the second processing unit is an MCU.

According to a seventh aspect, an apparatus is provided. The apparatus has a function of implementing behavior of the first processing unit in any method according to the foregoing aspects and the possible implementations, or the apparatus has a function of implementing behavior of the second processing unit in any method according to the foregoing aspect and the possible implementations. The function may be implemented by hardware, or may be implemented by hardware executing corresponding software. The hardware or the software includes at least one module or unit corresponding to the foregoing function.

According to an eighth aspect, an electronic device is provided, including a first processing unit and a second processing unit in any design of any one of the foregoing aspects.

According to a ninth aspect, an electronic device is provided. The electronic device includes a processor and a memory. The memory is configured to store computer program code, and the computer program code includes computer instructions. When executing the computer instructions, the processor performs the method according to any possible design of any one of the foregoing aspects.

According to a tenth aspect, an embodiment of this application provides a chip system. The chip system is applied to an electronic device. The chip system includes one or more interface circuits and one or more processors. The interface circuit and the processor are interconnected through a line. The interface circuit is configured to receive a signal from a memory of the electronic device, and send the signal to the processor. The signal includes computer instructions stored in the memory. When the processor executes the computer instructions, the electronic device performs the method according to any one of the foregoing aspects and any possible implementation of the foregoing aspects.

According to an eleventh aspect, an embodiment of this application provides a computer-readable storage medium. The computer-readable storage medium includes computer instructions. When the computer instructions are run on an electronic device, the electronic device is enabled to perform the method according to any possible implementation of any aspect.

According to a twelfth aspect, an embodiment of this application provides a computer program product. When the computer program product runs on a computer, the computer is enabled to perform the method according to any one of the foregoing aspects and any possible implementation of the foregoing aspects.

For beneficial effects of the designs of the second aspect to the twelfth aspect, refer to related descriptions in the first aspect. Details are not described again.

### BRIEF DESCRIPTION OF DRAWINGS

FIG. 1 and FIG. 2 are diagrams of structures of an apparatus according to an embodiment of this application;
FIG. 3A and FIG. 3B are diagrams of architectures of an apparatus according to an embodiment of this application;
FIG. 4A is a flowchart of a collaborative working method according to an embodiment of this application;
FIG. 4B is a diagram of interfaces according to an embodiment of this application;
FIG. 5 is a flowchart of a collaborative working method according to an embodiment of this application;
FIG. 6 is a diagram of interfaces according to an embodiment of this application;
FIG. 7A is a flowchart of a collaborative working method according to an embodiment of this application;
FIG. 7B is a diagram of interfaces according to an embodiment of this application;
FIG. 8 is a flowchart of a collaborative working method according to an embodiment of this application;
FIG. 9 is a diagram of interfaces according to an embodiment of this application;
FIG. 10A is a flowchart of a collaborative working method according to an embodiment of this application;
FIG. 10B is a diagram of interfaces according to an embodiment of this application;
FIG. 11A is a flowchart of a collaborative working method according to an embodiment of this application;
FIG. 11B is a diagram of interfaces according to an embodiment of this application;
FIG. 12A is a flowchart of a collaborative working method according to an embodiment of this application;
FIG. 12B is a diagram of interfaces according to an embodiment of this application;
FIG. 13 is a diagram of a structure of an electronic device according to this application; and
FIG. 14 is a diagram of a chip system according to this application.

### DESCRIPTION OF EMBODIMENTS

In the specification and the accompanying drawings of this application, terms such as "first" and "second" are intended to distinguish between different objects or distinguish between different processing on a same object. Words such as "first" and "second" may distinguish between same items or similar items that provide basically same functions and purposes. For example, a first device and a second device are merely intended to distinguish between different devices, and do not limit a sequence thereof. A person skilled in the art may understand that the words such as "first" and "second" do not limit a quantity or an execution sequence, and the words such as "first" and "second" do not indicate a definite difference.

"At least one" means one or more, and "a plurality of" means two or more.

"And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word like "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

Currently, a watch may run an AP in a normal mode, and the AP controls displaying of all interfaces of the watch. In this process, an MCU may run an algorithm, collect data, and transmit the collected data to the AP, and the AP displays the interface based on the collected data. The watch may enter a power saving mode based on an operation instruction of a user. After entering a super power saving mode, the watch controls the AP to be powered off (not to run anymore), and controls the MCU to start to run. A processing capability of the MCU is limited. Therefore, in the power saving mode, the watch can perform only some functions, and the other functions are unavailable. For example, a call cannot be made in the power saving mode. For another example, in the power saving mode, the user can use only some low power consumption applications, and cannot use high power consumption applications. Therefore, use performance of the watch is low.

To resolve the foregoing technical problem, embodiments of this application provide a collaborative working method. In the method, both an AP and an MCU in an electronic device may remain powered on. In different scenarios, for example, at different moments, the watch may hand over a control permission of an input/output device such as a display to a corresponding processor, so that a corresponding function is performed via the corresponding processor to meet a current use scenario. For example, in a scenario in which a battery level is low or a to-be-displayed interface is simple, the watch hands over the control permission of the display to the MCU, and controls, via the MCU, the display to display a corresponding interface (for example, a simple interface), which can reduce power consumption of the watch. In scenarios in which the battery level is high enough or a displaying frame rate requirement is high, the watch hands over the control permission of the display to the AP, and controls, via a high-performance AP, displaying of a corresponding interface (for example, a complex interface or an interface with a high frame rate), to improve displaying effect and displaying performance. In this way, because the AP and the MCU can collaboratively work in different scenarios, a problem that some functions cannot be implemented when the MCU works independently in the power saving mode can be avoided, and availability of the electronic device is improved. For example, when the AP is powered on, the electronic device may perform a handover to the MCU for controlling displaying of an interface, to reduce displaying power consumption.

The collaborative working method provided in embodiments of this application may be applied to various electronic devices that need to display an interface. Optionally, the electronic device may be a device such as a mobile phone, a tablet computer, a desktop computer, a laptop computer, a handheld computer, a notebook computer, a netbook, a personal digital assistant (personal digital assistant, PDA), or a television. A specific form of the electronic device is not specially limited in embodiments of this application.

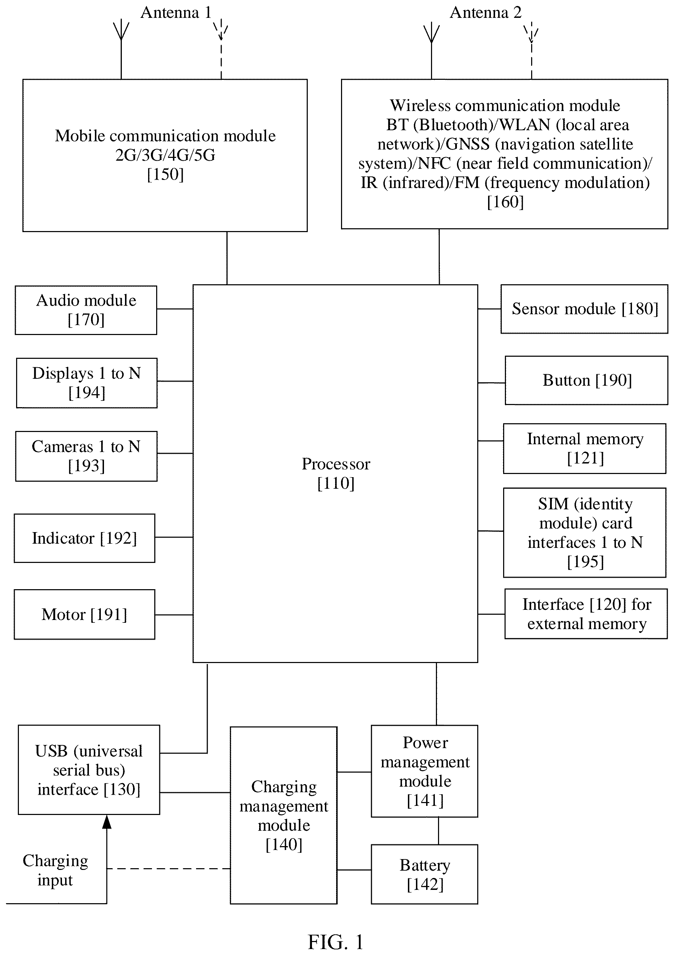

For example, FIG. 1 is a diagram of a structure of the electronic device according to an embodiment of this application.

The electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) interface 195, and the like.

It may be understood that the structure shown in this embodiment of this application does not constitute a specific limitation on the electronic device. In some other embodiments of this application, the electronic device may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a microcontroller unit (microcontroller unit, MCU), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

Both the AP and the MCU have a function of controlling displaying of an interface. Usually, the AP has a stronger displaying capability, but the MCU consumes less power for implementing displaying of a simple interface.

In a related technology, the AP is responsible for displaying of an interface, the MCU is responsible for using user data in a background, and a workload of the AP is heavy. The MCU also can control displaying of an interface. In consideration of this, in this embodiment of this application, displaying work of a part of interfaces may be completed by the MCU, to reduce the workload of the AP.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the electronic device.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a displaying function of the electronic device.

The USB interface 130 is an interface that conforms to a USB standard specification, and may be specifically a mini USB interface, a micro USB interface, a USB type-C interface, or the like. The USB interface 130 may be configured to connect to the charger to charge the electronic device, or may be configured to perform data transmission between the electronic device and a peripheral device, or may be configured to connect to a headset for playing audio through the headset. The interface may be further configured to connect to another electronic device like an AR device.

It may be understood that an interface connection relationship between the modules shown in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution to wireless communication such as 2G/3G/4G/5G applicable to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal through an audio device, or displays an image or a video via the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution to wireless communication that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device implements a displaying function through the GPU, the display 194, the application processor, and the like. The GPU is a processor for image processing, and is connected to the display 194 and the application processor. The GPU is configured to perform mathematical and geometric computation, and render an image. The processor 110 may include one or more GPUs, which execute program instructions to generate or change displaying information.

The display 194 is configured to display an image, a video, and the like. The display 194 includes a display panel. The display panel may be manufactured by using a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, quantum dot light-emitting diode (quantum dot light-emitting diode, QLED), or the like. In some embodiments, the electronic device may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The interface 120 for external memory may be configured to connect to an external storage card, for example, a microSD card, to extend a storage capability of the electronic device. The external memory card communicates with the processor 110 through the interface 120 for external memory, to implement a data storage function. For example, files such as music and videos are stored in the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) created when the electronic device is used, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the electronic device and data processing.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110. The electronic device may perform music playing, recording, or the like through the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The electronic device may receive a button input, and generate a button signal input related to user settings and function control of the electronic device.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the electronic device. The electronic device may support one or N SIM card interfaces, where N is a positive integer greater than 1.

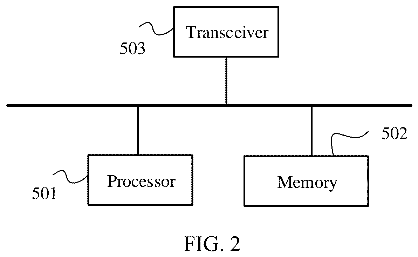

For example, FIG. 2 shows another example structure of the electronic device. As shown in FIG. 2, the electronic device includes a processor 501, a memory 502, and a transceiver 503. For implementations of the processor 501 and the memory 502, refer to implementations of the processor and the memory of the electronic device shown in FIG. 1. The transceiver 503 is configured for interaction between the electronic device and another device. The transceiver 503 may be a device based on Wi-Fi, Bluetooth, or another communication protocol.

FIG. 1 and FIG. 2 are merely possible examples of the structure of the electronic device, and do not constitute a limitation on the structure of the electronic device.

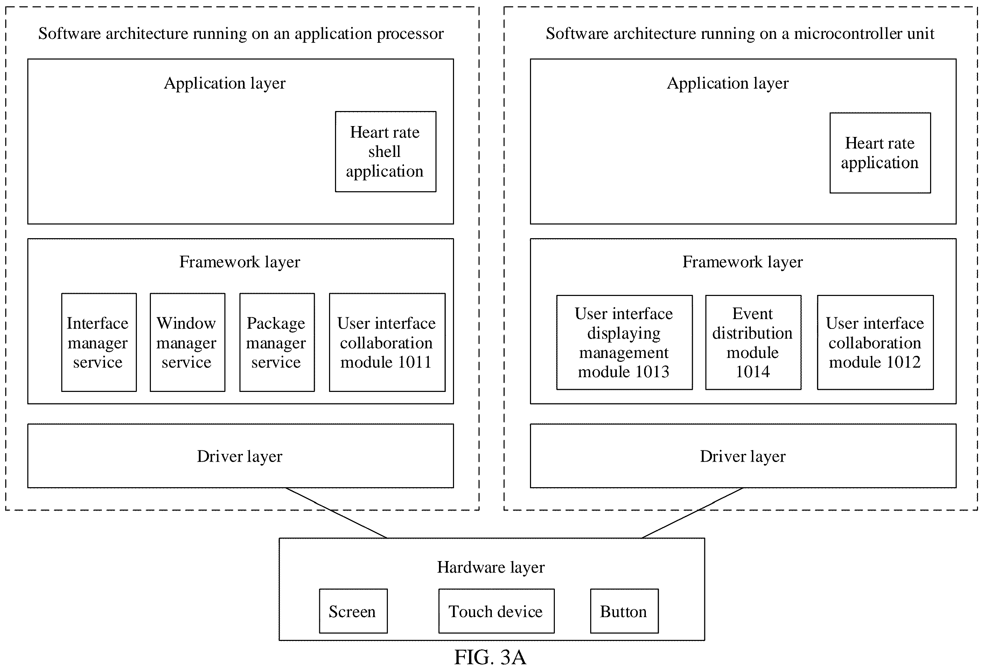

For example, FIG. 3A is a possible diagram of a software architecture applicable to the electronic device. The software structure is applicable to an electronic device having more than two processing units. Optionally, different processing units may have different interface displaying capabilities. Optionally, different operating systems or a same operating system may run on different processing units. For example, the Android^{®} operating system may run on an AP, and the LiteOS operating system may run on an MCU.

An example in which the electronic device includes the AP and the MCU, and the AP and the MCU have different interface displaying capabilities. As shown in FIG. 3A, an architecture of software running on the AP may be a layered architecture. The layered architecture may include an application layer, a framework layer, and a driver layer.

The application layer may include one or more applications, for example, a heart rate shell application. A heart rate shell application on the AP side may be used as an entry for starting a heart rate application on the MCU side. In some examples, a watch may control, via the AP, displaying of an interface 1, and the interface 1 may include an icon of the heart rate shell application. In response to tapping the icon of the heart rate shell application by a user, the watch may access an interface of the heart rate application via the MCU, so that the user can view a real-time heart rate.

Optionally, a shell application on the AP side has its own metadata, and the metadata indicates that remaining logic of a service is on the MCU side.

The framework layer may include an interface manager service (activity manager service, AMS), a window manager service (window manager service, WMS), a package manager service (package manager service, PMS), and a user interface collaboration module 1011 (which may be referred to as a collaboration module 1011 for short). For related descriptions of the AMS, the WMS, and the PMS, refer to related technologies. Details are not described herein again. The user interface (user interface, UI) collaboration module 1011 is configured to provide an interface deployment policy for the application at the application layer. The UI collaboration module 1011 is further configured to control a hardware device at a hardware layer by using the lower-layer driver layer.

Interface deployment policy information may be used to set that the AP controls displaying of an interface, or that the MCU controls displaying of an interface. For example, for an interface that has a small displaying difference and does not affect visual experience, and a public interface (for example, a watch face interface, a home screen interface (home screen for short), or a similar interface), it may be set by default that the MCU controls displaying of this type of interface, to reduce power consumption caused by displaying the interface. For another example, for a special watch face, such as a video watch face or a game watch face, it may be set by default that the AP controls displaying of an interface, to improve displaying effect of the interface.

In some embodiments, for an interface that can be drawn by both the AP and the MCU, for the interface, it may be set by default that the AP controls displaying of the interface. When a specific condition is met, the electronic device may perform a handover to the MCU for controlling displaying of the interface. Alternatively, for an interface that can be drawn by both the AP and the MCU, for the interface, it may be set by default that the MCU controls displaying of the interface. When a specific condition is met, the electronic device may perform a handover to the AP for controlling displaying of the interface.

For example, before delivery, for the watch, it is set by default that the AP controls displaying of a watch face interface. The watch controls, via the AP, displaying of the watch face interface. Then, when a battery level of the watch is low, the watch may perform the handover to the MCU for controlling displaying of the watch face interface, to reduce displaying power consumption of the watch.

In some embodiments, different processing units may control displaying of interfaces of different applications. For example, the AP controls displaying of an interface of an application 1, and the MCU controls displaying of an interface of an application 2. Different processing units may control displaying of different interfaces of a same application. For example, the MCU controls displaying of a simple interface of the application 1, to reduce power consumption caused by displaying of the simple interface. The AP controls displaying of a complex interface of the application 1, to meet processing and displaying requirements of the complex interface.

In some embodiments, it may be preset before delivery that the AP controls displaying of a part of interfaces of an application, and the MCU controls displaying of the other part of interfaces of the application. Optionally, the AP may control displaying of some complex pages of the application, to improve displaying effect of the complex pages. The MCU may control displaying of some simple pages of the application, to reduce displaying power consumption of the simple pages.

In this embodiment of this application, a flexible interface deployment policy is supported. In this way, a proper processor can be used to control displaying of a corresponding interface, thereby improving performance of the electronic device.

Similarly, as shown in FIG. 3A, an architecture of software running on the MCU may be a layered architecture. The layered architecture may include an application layer, a framework layer, and a driver layer.

The application layer may include one or more applications. For example, a heart rate application may be included.

The MCU may control displaying of all or a part of interfaces of the one or more applications. For example, the MCU may control displaying of some simple sports interfaces of a sports health application, to reduce processing load of the AP. In addition, compared with processing and controlling, via the AP, displaying of a simple interface, processing and controlling, via the MCU, displaying of the simple interface can reduce power consumption of the electronic device.

It can be learned that displaying work of a part of interfaces is performed by the AP, and displaying work of the other part of interfaces is performed by the MCU, which helps reduce processing load of the AP, and helps improve performance of the electronic device.

The framework layer may include a UI displaying management module 1013, an event distribution module 1014, and a UI collaboration module 1012. For a function of the UI collaboration module 1012, refer to related descriptions of the AP. Details are not described again.

The UI displaying management module 1013 is configured to control UI displaying, for example, controlling displaying of the interface of the heart rate application.

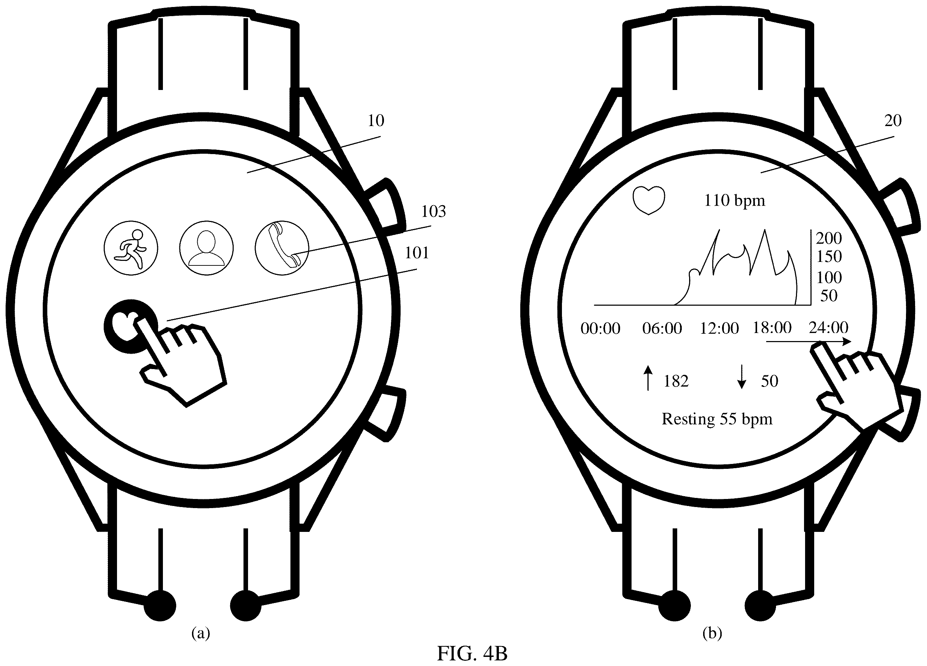

The event distribution module 1014 is configured to: after detecting that the user taps an icon 101 of a heart rate shell application (assuming that the application is an application running on the AP) shown in (a) in FIG. 4B, send an indication message to the UI collaboration module 1012 of the MCU, to indicate the UI collaboration module 1012 of the MCU to hand over a processor configured to control displaying of an interface from the AP to the MCU. In this way, the electronic device can display a next interface (for example, the interface of the heart rate application) via the MCU.

In some embodiments, the AP and the MCU may share the hardware device at the hardware layer. The hardware device includes but is not limited to a screen, a button, and the like.

FIG. 3A is merely a possible example of the software architecture of the electronic device, and does not constitute a limitation on the software architecture of the electronic device. It may be understood that the structure shown in this embodiment of this application does not constitute a specific limitation on the electronic device. In some other embodiments of this application, the electronic device may include more or fewer components than those shown in the figure, or combine some components, or split some components, or have a different component arrangement. The components shown in the figure may be implemented by hardware, software, or a combination of software and hardware.

The following describes in detail the technical solutions in embodiments of this application by using an example in which the electronic device is a watch.

Scenario 1: The watch hands over, from an AP to an MCU based on an operation instruction of a user, a processor configured to control displaying of an interface. In other words, a handover condition between processors is that the operation instruction of the user is detected.

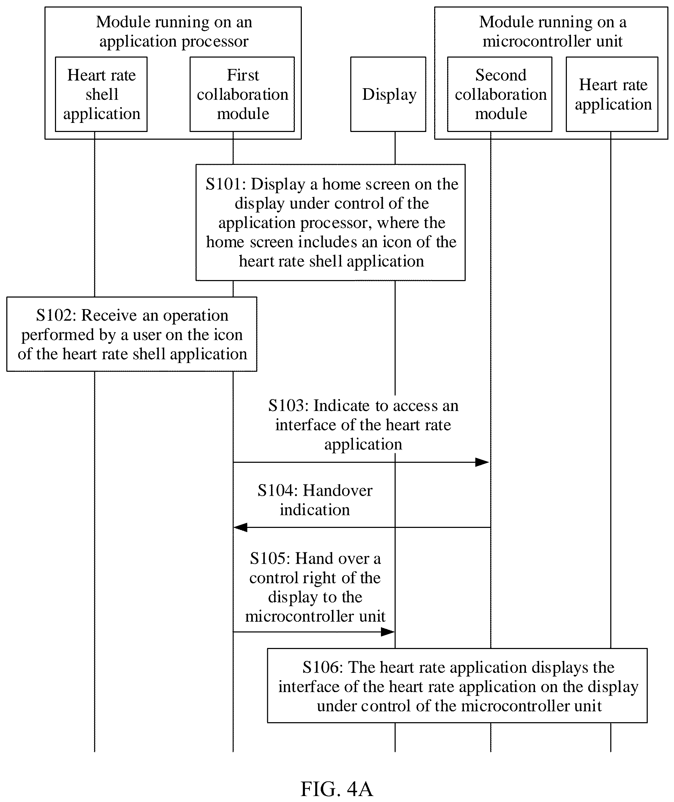

In other words, an example in which a heart rate application is used, and the handover condition between the processors is that displaying of an interface on which the operation instruction of the user is detected is controlled by the MCU is used. FIG. 4A shows a possible implementation procedure of a technical solution according to an embodiment of this application. As shown in FIG. 4A, the method includes the following steps.

S101: The watch controls, via the AP, displaying of a home screen (launcher interface).

Optionally, the home screen includes an icon of a heart rate shell application. In this embodiment of this application, the icon that is of the heart rate shell application and whose displaying is controlled by the AP may be used to access an interface that is of the heart rate application and whose displaying is controlled by the MCU.

In this embodiment of this application, the heart rate application may run on the MCU, and the MCU controls displaying of the interface of the heart rate application. To start, on the AP side, the heart rate application on an MCU side, an empty shell application running on the AP side may be set. The empty shell application corresponds to the heart rate application running on the MCU, and the empty shell application may be referred to as the heart rate shell application for short. The heart rate shell application does not have a corresponding application interface. After detecting that the user taps the icon of the heart rate shell application, the watch jumps to the interface that is of the heart rate application and whose displaying is controlled by the MCU. In other words, the heart rate shell application on the AP side may be used as an entry for accessing the interface of the heart rate application on the MCU side.

An activity (activity) of the heart rate shell application includes metadata. The metadata includes but is not limited to the icon (icon) of the heart rate shell application, application (application) information, an application (the heart rate application) corresponding to the heart rate shell application, and the like. In this embodiment of this application, the metadata of the heart rate shell application further includes first metadata. The first metadata is used to identify that the heart rate shell application is the empty shell application corresponding to the heart rate application.

Optionally, the metadata of the heart rate shell application is stored in storage space of the watch.

For example, as shown in (a) in FIG. 4B, a watch A controls, via the AP, displaying of a launcher interface 10 (an example of a first interface). The launcher interface includes the icon 101 (an example of a first icon) of the heart rate shell application.

Optionally, as shown in (a) in FIG. 4B, the launcher interface 10 may further include an icon of an application (for example, an icon 103 of a phone application) that can run on the AP. In response to tapping the icon 103 of the phone application by the user, the watch may start the phone application running on the AP.

Optionally, as shown in (a) in FIG. 4B, UI effect of the icon 101 of the heart rate shell application is different from UI effect of the icon 103 of a phone shell application. For example, as shown in (a) inFIG. 4B, the icon 101 on a black background represents an icon (an example of the first icon) of a shell application, and the icon 103 on a white background represents an icon (an example of a second icon) of a common application (a non-shell application). The icon 103 is used to trigger running of the phone application (an example of a fourth application).

S102: The watch receives an operation performed by the user on the icon of the heart rate shell application.

For example, as shown in (a) inFIG. 4B, the user may tap the icon 101 of the heart rate shell application on the interface 10, and the watch receives the tap operation of the user.

S103: The watch sends a second indication message to a second collaboration module via a first collaboration module.

The first collaboration module may be the UI collaboration module 1011 on the AP side shown in FIG. 3A. The second collaboration module may be the UI collaboration module 1012 on the MCU side shown in FIG. 3A. The second indication message indicates to access the interface of the heart rate application on the MCU side. Optionally, the second indication information carries identification information of the heart rate application.

In a possible implementation, after detecting that the user taps the icon 101 of the heart rate shell application on the interface 10 shown in (a) inFIG. 4B, the watch sends an indication message A to the event distribution module 1014 at the framework layer, where the indication message A indicates to access the interface of the heart rate application. The event distribution module 1014 may obtain the metadata of the heart rate shell application from the storage space based on the indication message A, and learn, based on the metadata of the heart rate shell application, that the watch needs to perform a handover to the MCU for controlling displaying of the interface of the heart rate application. In this case, the event distribution module 1014 sends an indication message B (indicating to access the interface of the heart rate application) to the first collaboration module, to indicate to control, via the MCU, displaying of the interface of the heart rate application.

In a possible implementation, information about the interface of the heart rate application is stored in storage space on the AP side, and the first collaboration module on the AP side sends the information about the interface of the to-be-started heart rate application to the second collaboration module on the MCU side.

In another possible implementation, the information about the interface of the heart rate application is stored in storage space on the MCU side. After the first collaboration module on the AP side sends the second indication message (indicating to access the interface of the heart rate application) to the second collaboration module on the MCU side, the second collaboration module may obtain the information about the interface of the heart rate application from the storage space on the MCU side, and control a display to display the interface of the heart rate application based on the information about the interface of the heart rate application.

In a possible implementation, the heart rate shell application has its own interface displaying information, for example, an interface of a transition animation. After detecting that the user taps the heart rate shell application, the watch displays the interface of the transition animation based on the interface displaying information of the heart rate shell application. In addition, if the watch determines, based on the metadata of the heart rate shell application, that a handover to the MCU for controlling displaying of the interface of the heart rate application needs to be performed, the watch performs the handover to the MCU for controlling displaying of the interface of the heart rate application. In this way, after the user taps the heart rate shell application, the watch may first display the interface of the transition animation, and then the MCU controls displaying of the interface of the heart rate application.

S104: The second collaboration module sends a handover indication to the first collaboration module.

The handover indication indicates the first collaboration module to release a control right of the display to the MCU.

In a possible implementation, the MCU sends the handover indication to the first collaboration module via the second collaboration module, to indicate to hand over the control right of the display to the MCU.

An example in which the second collaboration module indicates the first collaboration module to hand over the control right of the display to the MCU is used. In some other embodiments, after receiving the operation of tapping the icon of the heart rate shell application by the user, the watch may control the first collaboration module of the AP to hand over the control right of the display to the MCU, and the second collaboration module does not need to indicate the first collaboration module to hand over the control right.

S105: The first collaboration module hands over the control right of the display to the MCU.

In a possible implementation, the first collaboration module sends the handover instruction to the display, to control the control right of the display to be handed over to the MCU.

S106: The heart rate application displays the interface of the heart rate application on the display under control of the MCU.

Optionally, in some examples, to enable smooth transition between interfaces, before displaying the interface of the heart rate application on the MCU side, the display may display start animation effect (an example of first animation effect) of the heart rate application. For example, the AP may set the start animation effect of the heart rate application. After the user taps the icon of the heart rate shell application shown in (a) in FIG. 4B, the AP may control the display to display the start animation effect of the heart rate application. Then, after the control right of the display is handed over to the MCU, the MCU may send information about a drawn interface of the heart rate application to the display based on identification information of the heart rate application, and the display displays an interface 20 that is of the heart rate application and that is shown in (b) in FIG. 4B.

Alternatively, optionally, in a process of the handover from the AP to the MCU, the MCU may also control the display to display the start animation effect of the heart rate application.

In some other examples, still as shown in (a) inFIG. 4B, if it is assumed that the phone application runs on the AP, after detecting that the user taps the icon 103 of the phone application, the watch may continue to control, via the AP, displaying of an interface of the phone application.

In the foregoing solution, in different scenarios, for example, at different moments, the watch may hand over a control permission of an input/output device such as a display to a corresponding processor, so that a corresponding function is performed via the corresponding processor to meet a current use scenario. For example, in a scenario in which a battery level is low or a to-be-displayed interface is simple, the watch hands over the control permission of the display to the MCU, and controls, via the MCU, the display to display a corresponding interface (for example, a simple interface), which can reduce power consumption of the watch. In scenarios in which the battery level is high enough or a displaying frame rate requirement is high, the watch hands over the control permission of the display to the AP, and controls, via a high-performance AP, displaying of a corresponding interface (for example, a complex interface or an interface with a high frame rate), to improve displaying effect and displaying performance.

The foregoing mainly uses handing over the control right of the display as an example for description. In some other embodiments, when the processor is handed over, the control permission of a device such as a button or a touchscreen device may also be handed over. In this embodiment of this application, a type and a quantity of hardware whose control permission needs to be handed over when the processor is handed over are not limited. For example, when the AP is powered on, if detecting that the user taps the icon of the heart rate shell application, the electronic device may determine to hand over the control right of the display to the MCU, and correspondingly, hand over the control rights of the touchscreen and the button to the MCU. In this way, the MCU may control displaying of a heart rate interface, process a touch event that is entered by the user on the heart rate interface via the display, and process information that is entered by the user on the heart rate interface via the button.

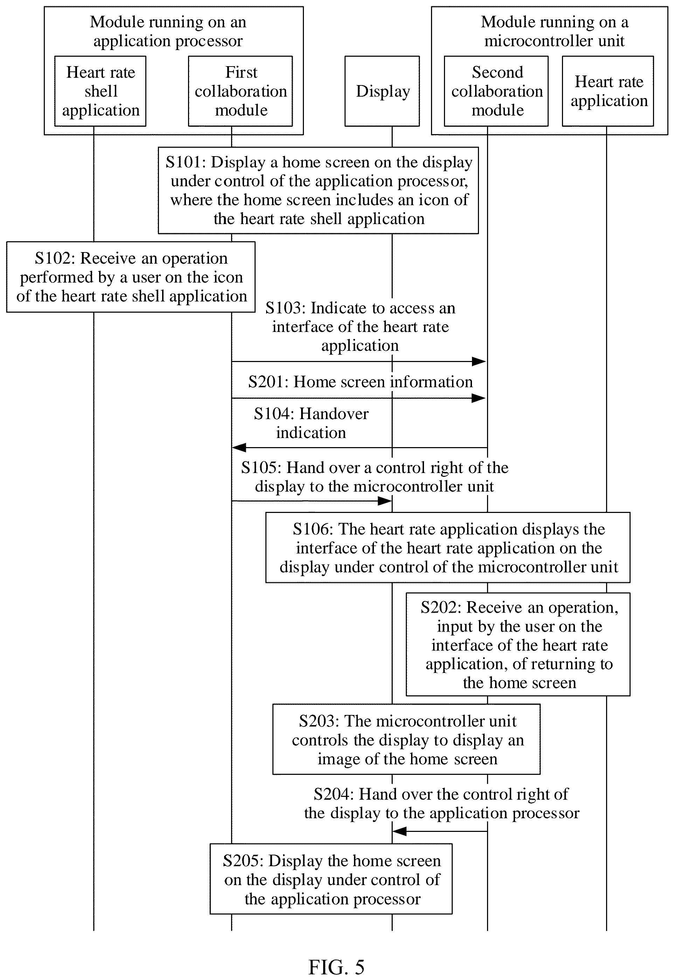

An embodiment of this application further provides a collaborative working method. After detecting that the user taps the icon 101 (used to trigger the watch to perform a handover to the MCU) of the heart rate shell application that is shown in (a) inFIG. 4B and that runs on the AP, the first collaboration module on the AP side may synchronize information about the home screen to the second collaboration module on the MCU side. In this way, in a subsequent process in which the user uses the heart rate application running on the MCU, if the user wants to jump back to the home screen of the watch, the MCU may control, based on the information about the home screen, the watch to quickly jump from the interface of the heart rate application to an image of the home screen, which improves smoothness of displaying the image. As shown in FIG. 5, the method includes S101 to S103, S201, S104 to S106, and S202 to S205. For specific implementation of S101 to S106, refer to the foregoing embodiment. Details are not described herein again. The following describes specific implementation of S201 to S205.

S201: The first collaboration module sends the information about the home screen to the second collaboration module.

The first collaboration module is the UI collaboration module 1011 on the AP side, and the second collaboration module is the UI collaboration module 1012 on the MCU side.

In a possible implementation, if the MCU can draw the home screen, the first collaboration module on the AP side may synchronize information such as drawing coordinates of the home screen to the MCU, so that the MCU draws the home screen based on the information such as the drawing coordinates.

Alternatively, if the MCU cannot draw the home screen, the first collaboration module on the AP side may synchronize screenshot information of the home screen to the MCU. In this way, in a scenario in which the user wants to jump back to the home screen, the MCU may control displaying of the screenshot of the home screen, so that the user can quickly view content displayed on the home screen.

In a possible implementation, the AP may use screenshot code to take a screenshot of information of a current interface (for example, the home screen), and may transmit the screenshot information of the home screen to the MCU via the first collaboration module.

Alternatively, in another possible implementation, a hardware layer of the watch may provide a port for obtaining a buffer (buffer) of an interface displayed by the watch. The second collaboration module may call this port through the driver layer, to obtain buffer information of an interface (for example, the home screen) currently displayed on the display.

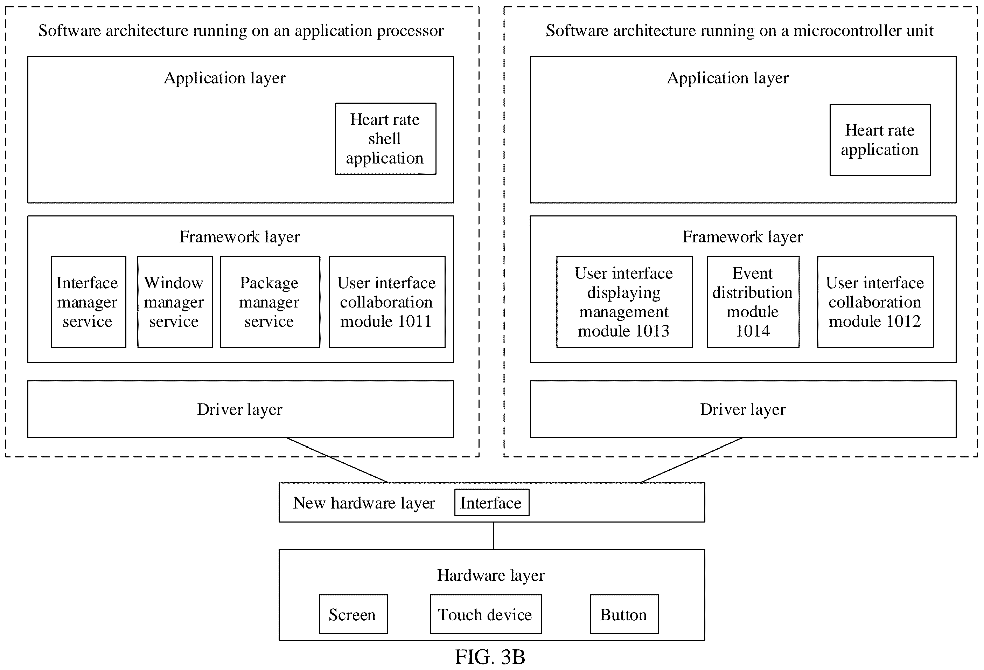

Alternatively, in another possible implementation, as shown in FIG. 3B, a virtual hardware layer is added between the driver layer and the existing hardware layer, the driver layers of the AP and the MCU are both connected to the added hardware layer, and the added hardware layer is connected to the existing hardware layer. The new virtual hardware layer may provide the port for obtaining a buffer of an interface displayed by the watch.

S202: The second collaboration module receives an operation, input by the user on the interface of the heart rate application, of returning to the home screen.

For example, the operation of returning to the home screen may be a right sliding operation or the like.

For example, as shown in (b) in FIG. 4B, the watch controls, via the MCU, displaying of the interface 20 of the heart rate application. The user inputs the right sliding operation on the interface 20 of the heart rate application, and the watch receives the right sliding operation of the user, and sends information about the right sliding operation to the second collaboration module on the MCU side.

S203: The MCU controls the display to display the image of the home screen.

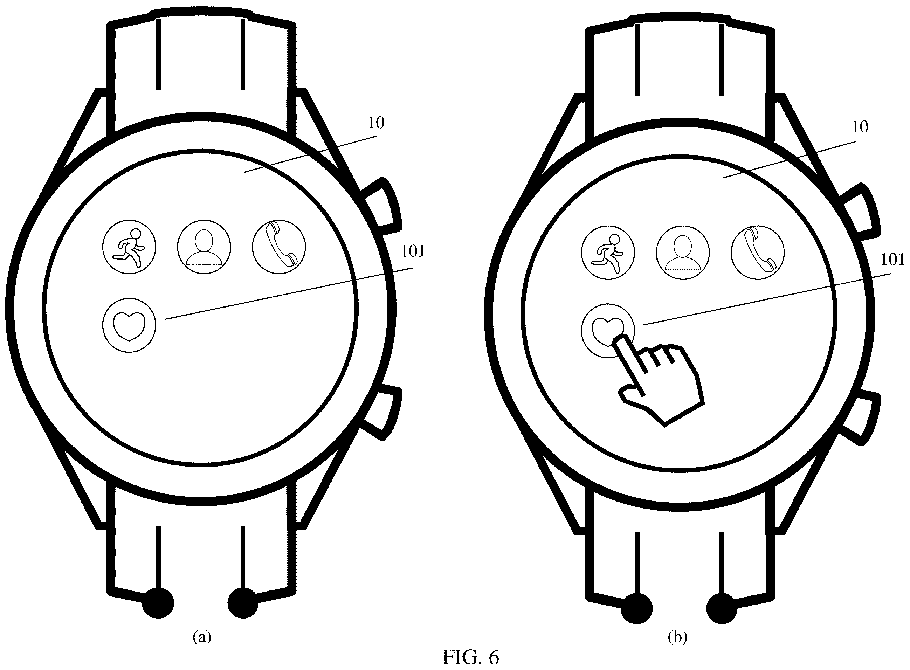

In this embodiment of this application, after learning, via the second collaboration module, that the user inputs the right sliding operation on the interface that is of the heart rate application and that is shown in (b) in FIG. 4B, the watch determines that the user wants to jump back to the home screen of the watch. In this case, the watch may transfer, to the display based on an interface jumping intention of the user, a home screen image drawn by the MCU or a screenshot image of the home screen, and the display may quickly display an image (an example of an image of the first interface) of the home screen 10 shown in (a) in FIG. 6. In this way, before the watch hands over the control right of the display back to the AP, the MCU may first control displaying of the image of the home screen, and a displayed interface of the watch may smoothly transition from the interface of the heart rate application to the home screen. This reduces a probability that a black screen occurs on the screen in an interface switching process.

S204: The second collaboration module hands over the control right of the display to the AP.

S205: Display the home screen on the display under control of the AP.

In this embodiment of this application, as shown in (a) in FIG. 6, after detecting the operation of returning to the home screen, the MCU may hand over the control right of the display back to the AP, and may send a second message to the AP, to indicate the AP to control displaying of the home screen. As shown in (b) in FIG. 6, the AP continues to control displaying of the home screen. In some examples, the user may interact with the watch via a real home screen. For example, the user may tap an icon of a corresponding application on the home screen, to start the corresponding application.

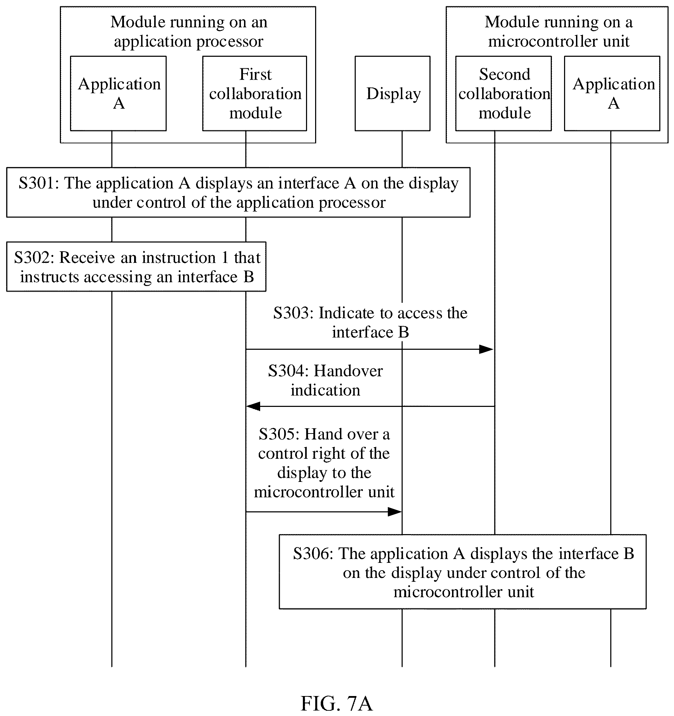

The foregoing mainly uses an example in which different processing units control displaying of interfaces of different applications. In some other embodiments, the different processing units may further control displaying of different interfaces of a same application. FIG. 7A shows an example of a procedure of the method. The method includes the following steps.

S301: An application A displays an interface A on the display under control of the application processor.

In a possible implementation, the application A (an example of a fifth application) may be set to be allowed to run on the AP and the MCU, and it may be set that the AP controls displaying of the interface A of the application A, and that the MCU controls displaying of an interface B of the application A. Metadata corresponding to the interface A may include configuration information (an example of first configuration information), and the configuration information indicates to perform a handover to the MCU for displaying the interface B.

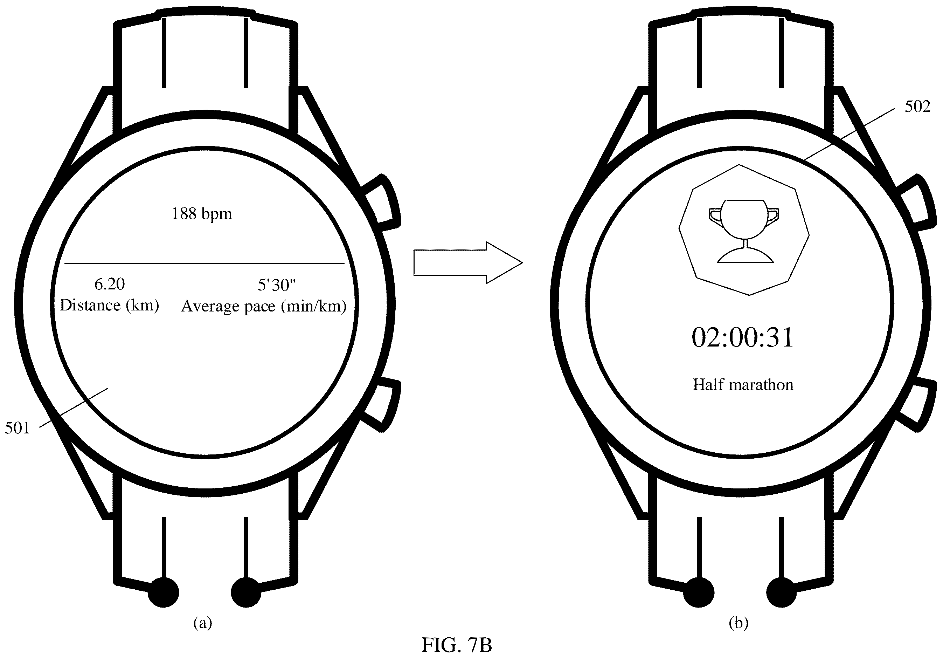

For example, as shown in (a) in FIG. 7B, initially, a health application (an example of the application A) runs on the AP, and the watch may control, via the AP, displaying of an interface 501 (an example of the interface A) of the health application.

S302: The watch receives an instruction 1 that instructs accessing the interface B.

For example, the watch receives the instruction 1 (an example of a first event) that instructs accessing an interface 502 (an example of the interface B) shown in (b) in FIG. 7B.

S303: The watch sends indication information to the second collaboration module.

The indication information (an example of a fourth message) indicates to access the interface B.

In a possible implementation, after detecting the instruction 1 (instructing jumping to the interface B of the application A), the framework layer of the watch may determine, based on the obtained metadata of the interface A, that when switching from the interface A (an example of a third interface) to the interface B (an example of a fourth interface), the framework layer needs to perform the handover to the MCU for controlling displaying of the interface B, and the framework layer may send the indication information to the second collaboration module via the event distribution module 1014. Subsequently, the second collaboration module may indicate the first collaboration module to hand over the control right of the display to the MCU.

S304: The second collaboration module sends a handover indication to the first collaboration module.

The handover indication may indicate to hand over the control right of the display from the AP to the MCU.

S305: The first collaboration module hands over the control right of the display to the microcontroller unit in response to the handover indication.

S306: The application A displays the interface B on the display under control of the microcontroller unit.

For example, as shown in (a) in FIG. 7B, initially, a health application runs on the AP, and the watch may control, via the AP, displaying of the interface 501 (an example of the third interface) of the health application. Then, when a specific condition is met, for example, when the user wants to view a time interface of current exercise and taps a button on the watch, the mobile phone may determine, based on metadata corresponding to the interface 501, that the mobile phone needs to perform a handover to the MCU for controlling displaying of the to-be-displayed time interface. In this case, the mobile phone may hand over the control right of the display to the MCU, and control, via the MCU, displaying of the time interface 502 (an example of the fourth interface) of the health application shown in (b) in FIG. 7B.

Scenario 2: The watch hands over, from an AP to an MCU based on service triggering, a processor configured to control displaying of an interface. In other words, a handover condition between processors is that a target service is detected.

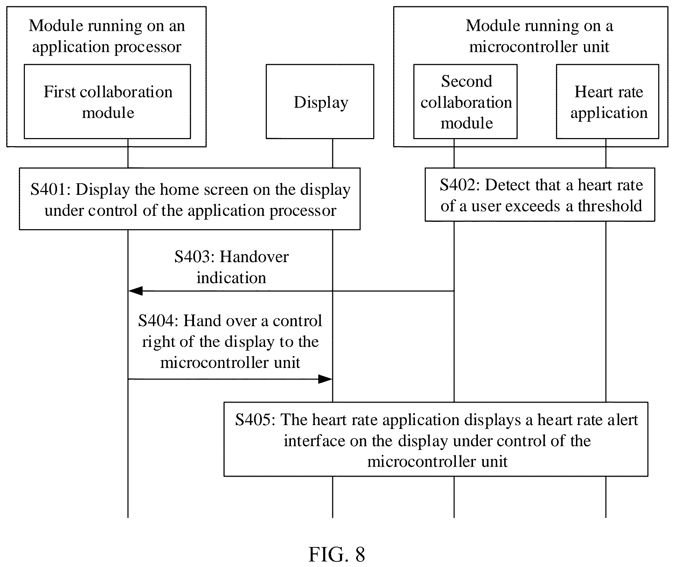

An example in which a heart rate alert service runs on the MCU, and the watch executes the heart rate alert service is used. When detecting that a heart rate of the user exceeds a threshold, the watch may automatically perform a handover to the MCU for controlling displaying of a heart rate alert interface. Specifically, as shown in FIG. 8, the method may include the following steps.

S401: The watch displays the home screen on a display under control of the application processor.

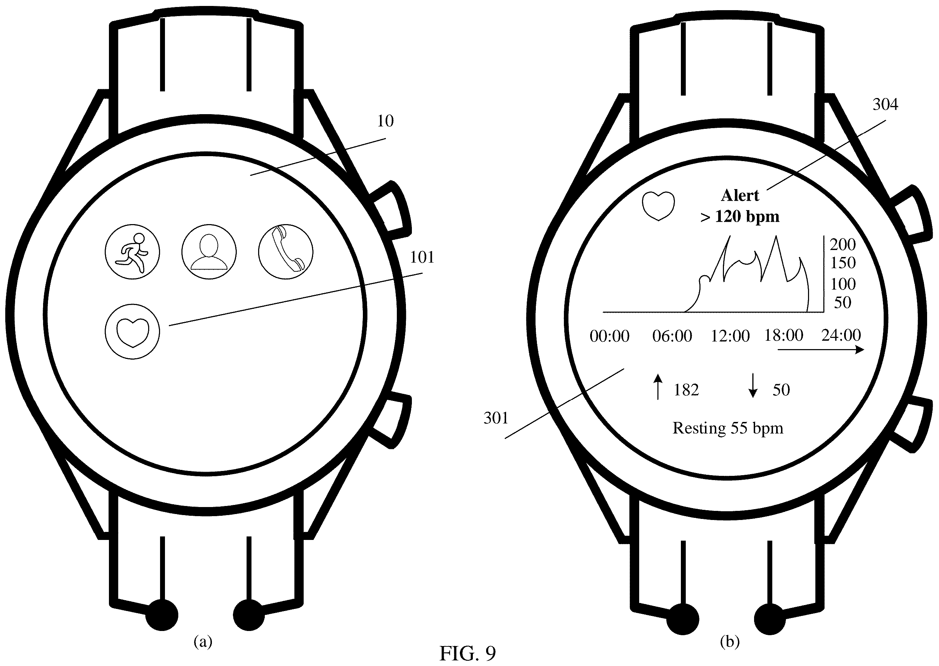

For example, as shown in (a) in FIG. 9, the AP of the watch controls the display to display the home screen 10.

S402: The watch detects that the heart rate of the user exceeds the threshold.

In this example, the watch controls, via the AP, a corresponding interface (for example, the home screen 10 shown in (a) in FIG. 9) to be displayed in a foreground, and the watch controls, via the MCU, the heart rate application (an example of a third application) to run in a background. When the watch detects that the heart rate of the user is greater than 120 beats/minute, the watch may perform the following step S303, so that the watch can subsequently control, via the MCU, displaying of the heart rate alert interface, to prompt the user that the heart rate exceeds the threshold.

S403: The watch sends a handover indication to the first collaboration module.

The handover indication indicates to hand over a control right of the display.

After detecting an event (an example of the first event) that the heart rate of the user exceeds the threshold, the watch determines that the watch needs to perform a handover to an MCU that is associated with the event and that processes and controls displaying of a heart rate alert interface corresponding to the event. In a possible implementation, the watch may send the handover indication (an example of a fifth message) to the first collaboration module, to indicate the first collaboration module to hand over a control right of hardware such as the display from the AP to the MCU.

In a possible implementation, the watch may send a handover preparation notification to the MCU, where the handover preparation notification is used to notify the MCU of preparing for the handover. The handover preparation includes but is not limited to drawing the heart rate alert interface. After receiving the handover preparation notification, the MCU may first draw the heart rate alert interface. In a possible implementation, after the MCU draws the heart rate alert interface, the watch sends the handover indication to the first collaboration module.

S404: The first collaboration module hands over the control right of the display from the AP to the MCU.

S405: The heart rate application displays the heart rate alert interface on the display under control of the MCU.

For example, as shown in (b) in FIG. 9, after the control right of the display is handed over from the AP to the MCU, the MCU may transfer a drawn heart rate alert interface to the display, and the display displays a heart rate alert interface 301. The heart rate alert interface 301 may include heart rate alert information 304.

In the foregoing solution, the watch executes the heart rate alert service in the background via the MCU, and continuously monitors the heart rate of the user. When the MCU detects that the heart rate of the user exceeds the threshold (the heart rate is abnormal), a heart rate alert is triggered. In this case, the watch may automatically hand over, from the AP to the MCU, the processor configured to control displaying of an interface. In this way, the watch may control, via the MCU with low power consumption, displaying of the heart rate alert interface, to reduce power consumption of the watch caused by displaying of an interface.

In addition, in a process in which the MCU controls displaying of the interface, the AP may not be powered off. In this way, it can be ensured that the user normally uses another function (for example, calling) that is of the watch and that is run by the AP.

Optionally, in this solution, in the process in which the MCU controls displaying of the heart rate alert interface, if the operation of returning to the home screen is detected, the electronic device may perform S203 to S205. In this way, the electronic device can respond to the user's demand of jumping to the home screen in a timely manner, which avoids a problem of a home screen displaying delay caused by a processor handover.

Scenario 3: The watch hands over, from an MCU to an AP based on an operation instruction of a user, a processor configured to control displaying of an interface. In other words, a handover condition between processors is that the operation instruction of the user is detected.

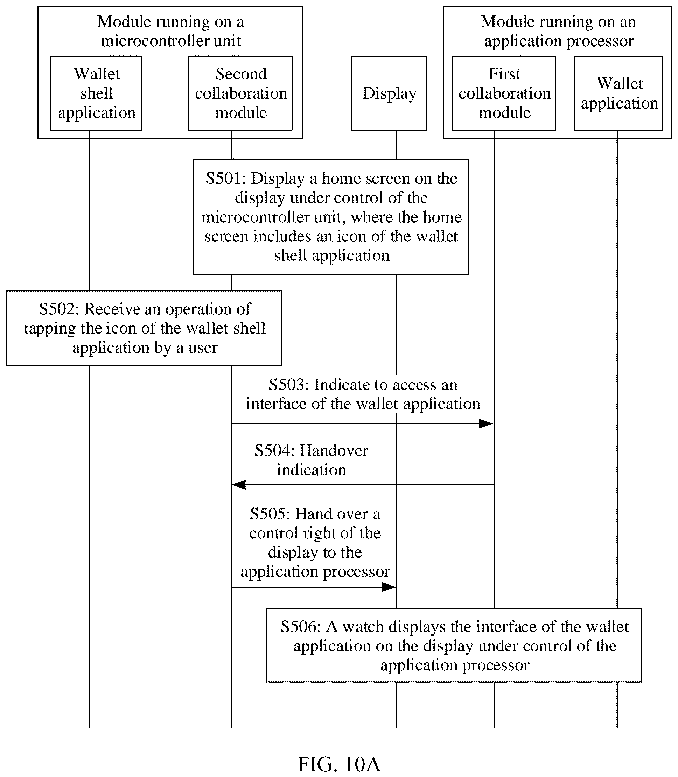

It is assumed that the MCU controls displaying of the home screen, and the user indicates, by using a wallet shell application on the home screen, the watch to start a wallet application, and performs a handover to the AP for controlling displaying of an interface of the wallet application. FIG. 10A shows an example diagram of a method corresponding to this scenario. As shown in FIG. 10A, the method includes the following steps.

S501: The watch displays the home screen on a display under control of the microcontroller unit.

The home screen includes an icon of the wallet shell application.

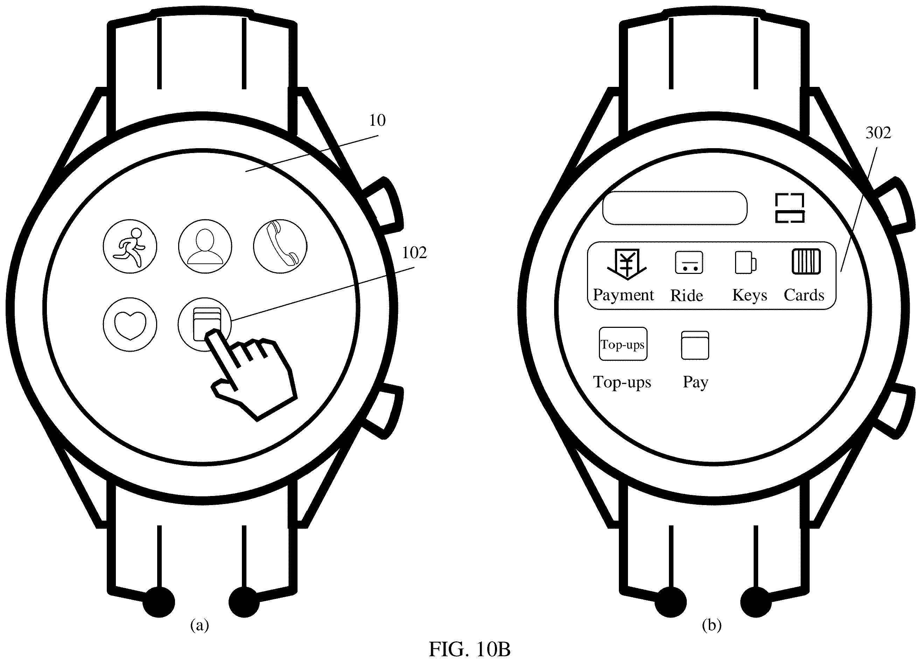

For example, an example in which the MCU controls displaying of a home screen of a watch B, and the AP controls displaying of the wallet application is used. As shown in (a) in FIG. 10B, the watch B controls, via the MCU, displaying of the home screen 10. The home screen 10 includes an icon 102 of a wallet empty shell application (which may be referred to as the wallet shell application for short). The wallet shell application running on the MCU is similar to the foregoing heart rate shell application, and is used to trigger the watch B to start the wallet application running on the AP.

S502: The watch receives an operation of tapping the icon of the wallet shell application by the user.

S503: The watch sends an indication message to the first collaboration module via the second collaboration module.

The indication message indicates to access an interface of the wallet application.

For example, as shown in (a) in FIG. 10B, after it is detected that the user taps the icon 102 of the wallet shell application, it is learned that the user wants to access the interface of the wallet application running on the AP side. In this case, the watch may send, according to an operation instruction of the user, the indication message to the first collaboration module of the AP via the second collaboration module of the MCU.

S504: The first collaboration module sends a handover indication to the second collaboration module.

The handover indication indicates the second collaboration module to release a control right of the display to the AP.

It may be understood that after receiving the indication message, the first collaboration module of the AP learns that the wallet application needs to be started, and may perform preprocessing to obtain the interface of the wallet application. After the processing is completed, the handover indication may be sent to the second collaboration module.

S505: The second collaboration module hands over the control right of the display to the application processor based on the handover indication.

S506: The watch displays the interface of the wallet application on the display under control of the application processor.

In a possible implementation, the AP transfers the information that is of the wallet application interface and that is obtained through processing in step S405 to the display. After the control permission of the display is handed over to the AP, the display may display an interface 302 that is of the wallet application running on the AP and that is shown in (b) in FIG. 10B.

In some examples, to enable smooth transition between interfaces, before displaying the interface of the wallet application on the AP side, the display may display start animation effect of the wallet application. For example, the MCU may set the start animation effect of the wallet application. After the user taps the icon of the wallet shell application shown in (a) in FIG. 10B, the MCU may control the display to display the start animation effect of the wallet application. Then, after the control right of the display is handed over to the AP, the AP may send information about a drawn interface of the wallet application to the display, and the display displays an interface 302 that is of the wallet application and that is shown in (b) in FIG. 10B.

Alternatively, optionally, in a process of the handover from the MCU to the AP, the AP may also control the display to display the start animation effect of the wallet application.

In the foregoing solution, the electronic device may hand over, between the AP and the MCU, the processor configured to control displaying of an interface. Correspondingly, a control permission of related hardware used for displaying of an interface may be handed over between the AP and the MCU. For example, at a proper moment, the electronic device controls the MCU to draw a simple interface and display the simple interface on the display (the MCU correspondingly obtains the control permission of the display), to reduce power consumption in an interface displaying process. At a proper moment, the electronic device controls the AP to draw a complex interface and display the complex interface on the display (the AP correspondingly obtains the control permission of the display), to improve displaying effect of the complex interface.

Optionally, in each application scenario of embodiments of this application, when one processing unit (for example, the first processing unit) controls displaying of an interface, another processing unit (for example, the second processing unit) may run in a low power consumption mode. When the second processing unit needs to process a service, the second processing unit resumes running in a normal power consumption mode.

Scenario 4: The watch hands over, from an MCU to an AP based on service triggering, a processor configured to control displaying of an interface. In other words, a handover condition between processors is that a target service is detected.

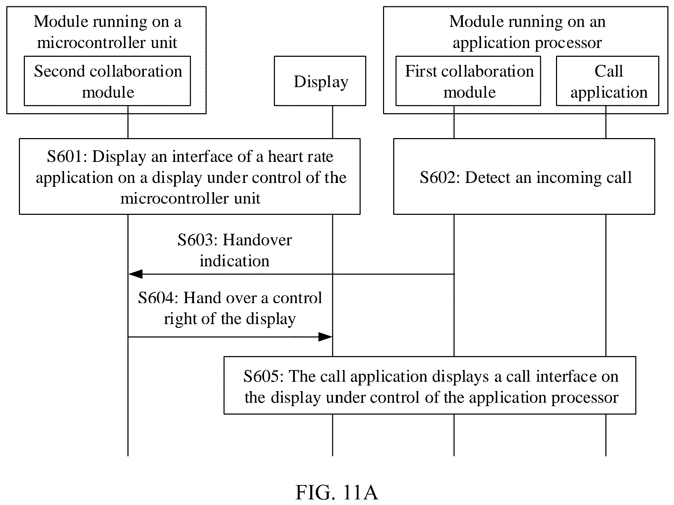

An example in which the watch currently controls, via the MCU, displaying of an interface of a heart rate application, and when detecting a call service running on the AP, the watch performs a handover to the AP for controlling displaying of a related interface of the call service is used. FIG. 11A shows a method flowchart in this scenario. As shown in FIG. 11A, the method may include the following steps.

S601: The watch displays an interface of a heart rate application on a display under control of the microcontroller unit.

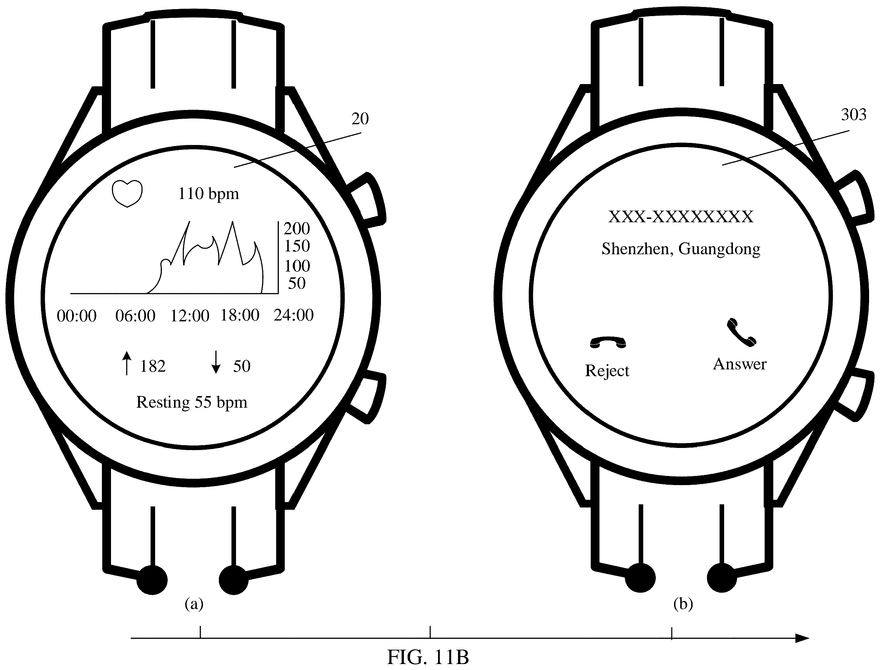

For example, as shown in (a) in FIG. 11B, the watch controls, via the MCU, displaying of the interface 20 of the heart rate application.

S602: The watch detects an incoming call message.

S603: The watch sends a handover indication to the second collaboration module.

The handover indication indicates the second collaboration module to hand over a control right of hardware such as the display from the MCU to the AP.

S604: The second collaboration module hands over the control right of the display.

In a possible implementation, after receiving the handover indication, the second collaboration module hands over the control right of a device such as the display to the AP.

S605: A call application displays a call interface on the display under control of the application processor.

It may be understood that after the control right of the display is handed over to the AP, the AP may control the call interface to be displayed on the display.

For example, initially, the MCU controls displaying of the interface of the heart rate application. After detecting an incoming call, the watch may hand over, from the MCU to the AP that matches an incoming call service, the processor configured to control displaying of an interface, so that the AP controls displaying of a related interface (for example, an interface 303 shown in (b) in FIG. 11B) of the incoming call service. In a call process, the watch controls the heart rate application to run in a background, and runs the heart rate application in the background on the MCU.

Optionally, after the call ends, the watch may hand over the processor configured to control displaying of an interface from the AP back to the MCU, so that the MCU continues to control displaying of the interface 20 of the heart rate application.

In the foregoing solution, in a process in which a user normally uses the electronic device, the electronic device can intelligently and automatically hand over, according to an operation instruction of the user or based on triggering of a service, the processor configured to control displaying of an interface without being perceived by the user. This helps improve performance of the electronic device.

In addition, in some scenarios, interfaces of a same application do not need to be separately developed in two systems. For example, in some scenarios, a simple interface of an application may be developed only in an MCU system, and a complex interface of the application may be developed only in an AP system. In this way, application development workload can be reduced. In addition, because UI code of some interfaces may be developed only in the AP or MCU system, storage space for storing the UI code may be reduced.

Scenario 5: In different displaying statuses, different processors control displaying of interfaces. In other words, a handover condition between the processors is that a change of the displaying status of the watch is detected.

The watch is used as an example. Displaying statuses of the watch may be classified into a lock screen state and an unlocked state (which may also be referred to as a non-screen-lock state). The lock screen state may include a screen-off lock screen state and a screen-on lock screen state. The user may enter unlocking information, such as an unlocking password, fingerprint information, and face information, in the unlocked state, to trigger the watch to unlock. After the watch unlocks the screen, an interface displayed when the watch is used last time may be jumped to, or the watch may jump to the home screen.

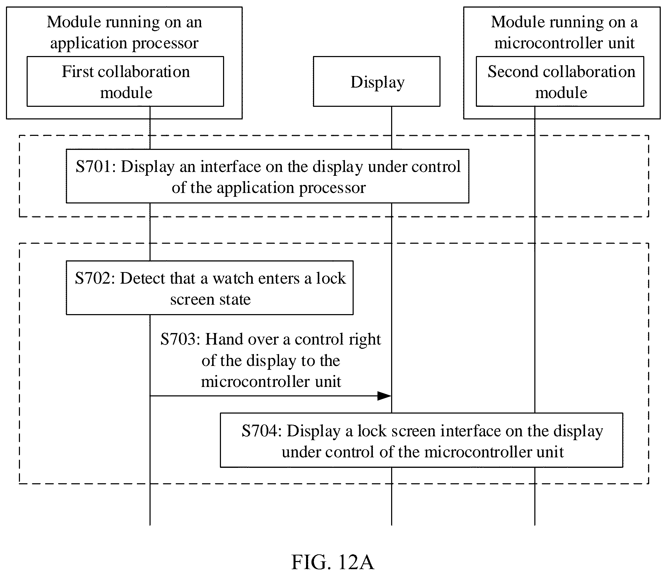

FIG. 12A shows an example of a method procedure in this scenario. As shown in FIG. 12A, the method may include the following steps.

S701: The watch displays an interface on the display under control of the application processor.

Optionally, in the non-lock screen state, when the handover condition is met, the electronic device may perform a handover to the AP or the MCU for controlling displaying of the interface. This can improve use performance of the electronic device, and can meet interface displaying requirements in different scenarios.

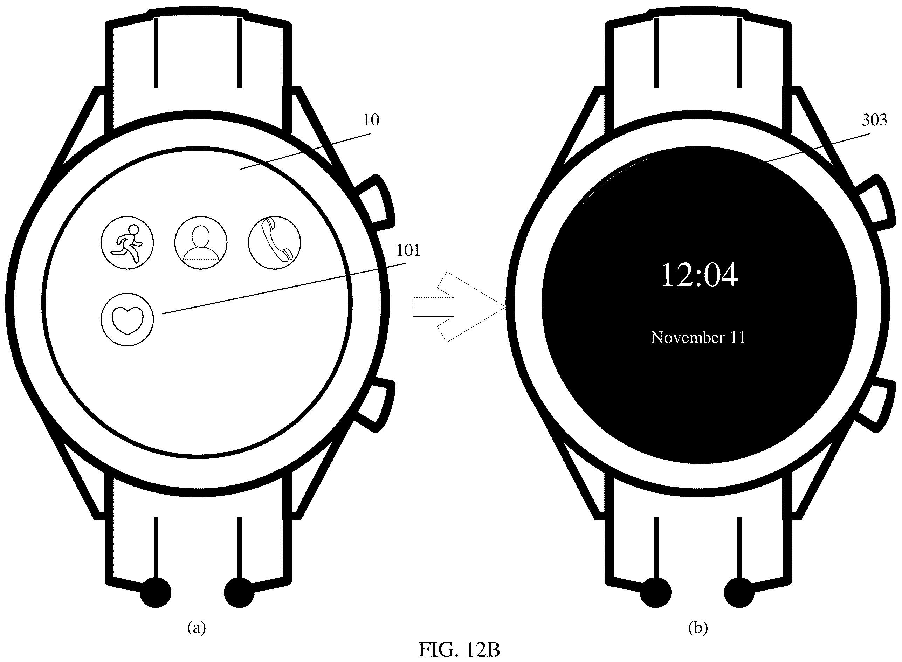

For example, in the non-lock screen state, the watch may control, via the AP, displaying of a home screen shown in (a) in FIG. 12B.

S702: The watch detects that the watch enters the lock screen state.

S703: The watch hands over a control right of the display to the microcontroller unit.

S704: The watch displays a lock screen interface on the display under control of the microcontroller unit.

It may be understood that after detecting that the watch enters the lock screen state, the watch performs a handover to the MCU for controlling displaying of the lock screen interface. For example, in (b) in FIG. 12B, an operation of indicating, by the user, the watch to display lock screen information in the lock screen state is detected. For example, after entering the lock screen state, when detecting that the user taps the screen, the watch may control, via the MCU, displaying of the interface 303 in the screen-off lock screen state. The interface 303 may include the lock screen information.

Optionally, the lock screen information may include information such as current time.

In some other embodiments, if the watch controls, via the MCU, displaying of an interface in the non-lock screen state, after it is detected that the watch enters the lock screen state, the MCU may continue to control displaying of the lock screen interface.

It can be learned that in a scenario such as displaying lock screen information, the watch may control, via the MCU, displaying of an interface, which can reduce power consumption of the watch caused by displaying.

In some other embodiments, when the watch is in the unlocked state, a processor configured to display an interface may be handed over by using any method in Scenario 1 to Scenario 4. For example, the watch may control displaying of a simple interface via the MCU, and control displaying of a complex interface via the AP, to balance displaying and power consumption performance of the watch.

The foregoing mainly uses handing over the control right of the display as an example for description. In some other embodiments, when the processor is handed over, the control permission of a device such as a button or a touchscreen device may also be handed over. In this embodiment of this application, a type and a quantity of hardware whose control permission needs to be handed over when the processor is handed over are not limited.

For example, after detecting that a screen of the electronic device is turned off, the electronic device may hand over a control right of the display to the MCU, and control, via the MCU, an off screen interface (for example, displaying some information of a watch face). In this scenario, control rights of a button and a touchscreen may continue to be retained on the AP. In this way, after the user taps the off screen interface whose displaying is controlled via the MCU, the electronic device may process the tap operation via the AP, and control, in response to the tap operation, the electronic device to display all information of the watch face in a screen-on state.

The foregoing mainly describes the processor handover methods in embodiments of this application by using an example of performing a handover to the MCU or AP for controlling displaying of an interface. An embodiment of this application further provides a processor handover method. The watch may determine a to-be-executed function, and perform a handover, based on the to-be-executed function, to a corresponding processor for processing.

An embodiment of this application further provides a collaborative working method. When an AP is powered on, when determining a processor configured to control displaying of an interface, a watch uses an MCU as much as possible, to reduce power consumption. Only when the MCU cannot control displaying of some interfaces, the MCU is handed over to the AP for controlling displaying of the interfaces. For example, for complex game interfaces, the MCU does not have enough computing power to draw these game interfaces or cannot ensure displaying smoothness of the game interfaces. In this case, the watch may perform the handover to the AP for controlling displaying of the game interfaces, to improve displaying effect of the game interfaces.

An embodiment of this application further provides a collaborative working method, in which an application may be installed on an AP and an MCU. In a normal mode, the application can run on the AP and MCU. After the AP is powered off, applications can still run on the MCU. In this way, the application can be kept alive as much as possible.

It should be understood that locations, names, shapes, and the like of elements (for example, a button, an icon, and a text) on UI interfaces corresponding to the foregoing interfaces are not fixed, and may be freely combined or designed based on a requirement.

It should be noted that the foregoing plurality of embodiments may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution sequence is an only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the foregoing method embodiments may be implemented separately or in combination.

Some other embodiments of this application provide an apparatus. The apparatus may be the foregoing electronic device, a component that supports a function of the electronic device, or the like. The apparatus may include a display, a memory, and one or more processors. The display and the memory are coupled to the processor. The memory is configured to store a program, and the program includes instructions. When the processor executes the instructions, the apparatus may perform the functions or steps performed by the electronic device in the foregoing method embodiments. For a structure of the apparatus, refer to the electronic device (apparatus) shown in any one of FIG. 1 to FIG. 3B.

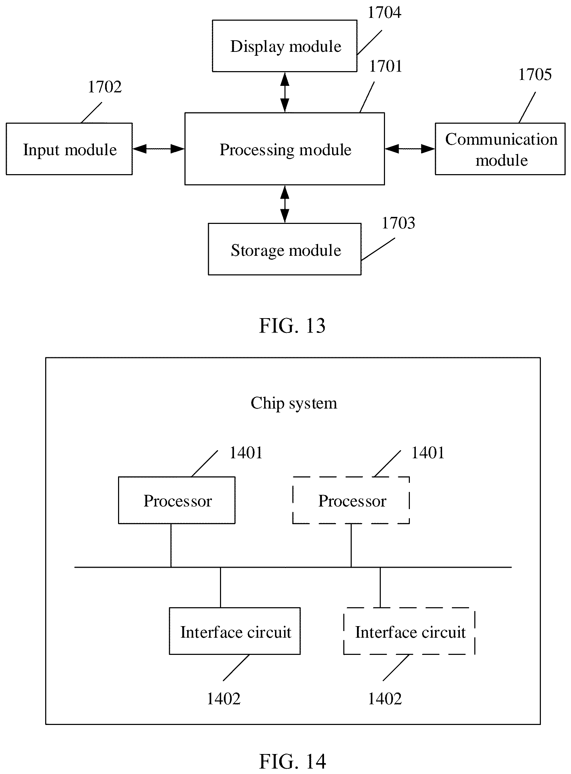

A core structure of the apparatus may be represented as a structure shown in FIG. 13. The apparatus includes a processing module 1701, an input module 1702, a storage module 1703, and a display module 1704.

The processing module 1701 may include at least one of a central processing unit (CPU), an application processor (Application Processor, AP), or a communication processor (Communication Processor, CP). The processing module 1701 may perform an operation or data processing related to control and/or communication of at least one of other elements of an electronic device of a user.

The input module 1702 is configured to obtain instructions or data input by the user, and transmit the obtained instructions or data to another module of the electronic device. Specifically, an input manner of the input module 1702 may include a touch, a gesture, proximity to a screen, or the like, or may be a voice input. For example, the input module may be a screen of the electronic device, and may obtain an input operation of the user, generate an input signal based on the obtained input operation, and transmit the input signal to the processing module 1701.

The storage module 1703 may include a volatile memory and/or a non-volatile memory. The storage module is configured to store instructions or data related to at least one of other modules of a user apparatus device.

The display module 1704 may include, for example, a liquid crystal display (LCD), a light-emitting diode (LED) display, an organic light-emitting diode (OLED) display, a micro-electro-mechanical system (MEMS) display, or an electronic paper display, and is configured to display content (for example, a text, an image, a video, an icon, and a symbol) that can be viewed by the user.

Optionally, the apparatus further includes a communication module 1705, configured to support the device to communicate with another device (via a communication network). For example, the communication module may be connected to a network through wireless communication or wired communication, to communicate with the another personal apparatus or a network server. The wireless communication may use at least one of cellular communication protocols, such as long term evolution (LTE), long term evolution advanced (LTE-A), code division multiple access (CDMA), wideband code division multiple access (WCDMA), universal mobile telecommunications system (UMTS), wireless broadband (WiBro), a global system for mobile communications (GSM), or 5G. The wireless communication may include, for example, short-range communication. The short-range communication may include at least one of wireless fidelity (Wi-Fi), Bluetooth, near field communication (NFC), magnetic stripe transmission (MST), or GNSS.

It should be noted that each functional module of the apparatus may perform one or more steps in the foregoing method embodiments.

An embodiment of this application further provides a chip system. As shown in FIG. 14, the chip system includes at least one processor 1401 and at least one interface circuit 1402. The processor 1401 and the interface circuit 1402 may be interconnected through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the electronic device is enabled to perform the steps in the foregoing embodiments. Certainly, the chip system may further include another discrete device. This is not specifically limited in embodiments of this application.

An embodiment of this application further provides a computer-readable storage medium. The storage medium includes a program or instructions. When the program or the instructions are run on a first device or a second device, the first device or the second device is enabled to perform the functions or steps performed by the first device or the second device in the foregoing method embodiments.

An embodiment of this application further provides a program product. When the program product runs on a first device or a second device, the first device or the second device is enabled to perform the functions or steps performed by the first device or the second device in the foregoing method embodiments.

The foregoing descriptions about implementations allow a person skilled in the art to clearly understand that, for the purpose of convenient and brief description, division of the foregoing functional modules is used as an example for illustration. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the current technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A collaborative working method, applied to an electronic device, wherein the electronic device comprises a first processing unit and a second processing unit, and the method comprises:
controlling, by the electronic device via the first processing unit, displaying of a first interface, wherein the first interface comprises a first icon; and
detecting, by the electronic device, an operation performed by a user on the first icon, and running a first application via the second processing unit.

2. The method according to claim 1, wherein the first icon is an icon of a second application, the second application runs on the first processing unit, and the second application is a shell application of the first application.

3. The method according to claim 1 or 2, wherein after detecting, by the electronic device, the operation performed by the user on the first icon, the method further comprises:
sending a first message to the second processing unit via the first processing unit, wherein the first message indicates the second processing unit to run the first application.

4. The method according to any one of claims 1 to 3, wherein after detecting, by the electronic device, the operation performed by the user on the first icon, the method further comprises:
sending, by the first processing unit, information about the first interface to the second processing unit;
receiving, by the second processing unit, an operation of returning to the first interface;
controlling, by the second processing unit based on the information about the first interface, displaying of an image of the first interface;
sending, by the second processing unit, a second message to the first processing unit, wherein the second message indicates the first processing unit to control displaying of the first interface; and
receiving, by the first processing unit, the second message from the second processing unit, and controlling, by the first processing unit in response to the second message, displaying of the first interface.

5. The method according to any one of claims 1 to 4, wherein after detecting, by the electronic device, the operation performed by the user on the first icon, the method further comprises:
handing over a control right of a first device to the second processing unit via the first processing unit.

6. The method according to claim 5, wherein after sending the first message to the second processing unit via the first processing unit, the method further comprises:
sending a handover indication to the first processing unit via the second processing unit, wherein the handover indication indicates the first processing unit to hand over the control right of the first device to the second processing unit.

7. The method according to any one of claims 1 to 6, wherein the first processing unit is a microcontroller unit MCU, and the second processing unit is an application processor AP, or the first processing unit is an AP, and the second processing unit is an MCU.

8. The method according to claim 5 or 6, wherein the first device comprises at least one of the following devices: a display, a button, and a touchscreen.

9. A collaborative working method, applied to an electronic device, wherein the electronic device comprises a first processing unit and a second processing unit, and the method comprises:
controlling, by the electronic device via the first processing unit, displaying of a fifth interface;
controlling, by the electronic device via the second processing unit, a third application to run in a background; and
detecting, by the electronic device, a first event of the third application via the second processing unit, and controlling, via the second processing unit, displaying of an interface of the third application.

10. The method according to claim 9, wherein after detecting, by the electronic device, the first event of the third application via the second processing unit, the method further comprises:
sending, by the second processing unit, a fifth message to the first processing unit; and
receiving, by the first processing unit, the fifth message, and handing over a control right of a display to the second processing unit based on the fifth message.

11. The method according to claim 9 or 10, wherein the first processing unit is a microcontroller unit MCU, and the second processing unit is an application processor AP, or the first processing unit is an AP, and the second processing unit is an MCU.

12. A collaborative working method, wherein the method comprises:
controlling, by a first processing unit, displaying of a first interface, wherein the first interface comprises a first icon; and
detecting, by the first processing unit, an operation performed by a user on the first icon, and sending a first message to a second processing unit, wherein the first message indicates the second processing unit to run a first application, and the first processing unit and the second processing unit are located in a same electronic device.

13. The method according to claim 12, wherein the first icon is an icon of a second application, the second application runs on the first processing unit, and the second application is a shell application of the first application.

14. The method according to claim 12 or 13, wherein after detecting, by the first processing unit, the operation performed by the user on the first icon, the method further comprises:
sending, by the first processing unit, information about the first interface to the second processing unit, to enable the second processing unit to control, based on the information about the first interface when an operation of returning to the first interface is detected, displaying of an image of the first interface;
receiving, by the first processing unit, a second message from the second processing unit; and
controlling, by the first processing unit in response to the second message, displaying of the first interface.

15. The method according to any one of claims 12 to 14, wherein after detecting, by the first processing unit, the operation performed by the user on the first icon, the method further comprises:
handing over, by the first processing unit, a control right of a first device to the second processing unit.

16. The method according to claim 15, wherein after sending, by the first processing unit, the first message to the second processing unit, the method further comprises:
receiving, by the first processing unit, a handover indication from the second processing unit, wherein the handover indication indicates the first processing unit to hand over the control right of the first device to the second processing unit.

17. The method according to any one of claims 12 to 16, wherein the first processing unit is a microcontroller unit MCU, and the second processing unit is an application processor AP, or the first processing unit is an AP, and the second processing unit is an MCU.

18. The method according to claim 15 or 16, wherein the first device comprises at least one of the following devices: a display, a button, and a touchscreen.

19. A collaborative working method, wherein the method comprises:
receiving, by a second processing unit, a first message from a first processing unit, wherein the first message indicates the second processing unit to run a first application; and
running, by the second processing unit, the first application in response to the first message.

20. The method according to claim 19, wherein the method further comprises:
detecting, by the second processing unit, that the first application is closed, and sending a third message to the first processing unit, to enable the first processing unit to control displaying of a second interface.

21. The method according to claim 19 or 20, wherein the method further comprises:
controlling, by the second processing unit, displaying of a third interface of a fifth application; and
detecting, by the second processing unit, an operation of accessing a fourth interface of the fifth application, and sending, by the second processing unit, a fourth message to the first processing unit, wherein the fourth message indicates the first processing unit to control displaying of the fourth interface.

22. The method according to any one of claims 19 to 21, wherein before running, by the second processing unit, the first application, the method further comprises:
sending, by the second processing unit, a handover indication to the first processing unit, wherein the handover indication indicates the first processing unit to hand over a control right of a first device to the second processing unit.

23. The method according to any one of claims 19 to 22, wherein the first processing unit is a microcontroller unit MCU, and the second processing unit is an application processor AP, or the first processing unit is an AP, and the second processing unit is an MCU.

24. The method according to claim 22, wherein the first device comprises at least one of the following devices: a display, a button, and a touchscreen.

25. A collaborative working method, wherein the method comprises:
controlling, by a second processing unit, a third application to run in a background;
detecting, by the second processing unit, a first event of the third application, and sending a fifth message to a first processing unit, to enable the first processing unit to hand over a control right of a display to the second processing unit; and
controlling, by the second processing unit, an interface of the third application to be displayed on the display.

26. The method according to claim 25, wherein the first processing unit is a microcontroller unit MCU, and the second processing unit is an application processor AP, or the first processing unit is an AP, and the second processing unit is an MCU.

27. A chip system, wherein the chip system comprises a processor, configured to support an electronic device to implement the method according to any one of claims 12 to 26.

28. An electronic device, wherein the electronic device comprises a first processing unit and a second processing unit, and the electronic device is configured to perform the method according to any one of claims 1 to 11.

29. A computer-readable storage medium, wherein the computer-readable storage medium stores instructions, and when the instructions are run on an electronic device, the electronic device is enabled to perform the method according to any one of claims 12 to 26.
